# EUROPÄISCHE PATENTANMELDUNG

(11) **EP 1 243 911 A1**
(43) Veröffentlichungstag der Anmeldung: **25.09.2002**
(21) Anmeldenummer: 01107116.4
(22) Anmeldetag: 22.03.2001
(51) Int. Cl.: G01N 1/31, G01N 1/36

(54) **Vorrichtung zur Gewebepräparation**

(71) Anmelder: Leica Mikrosysteme GmbH, 1170 Wien (AT)
(72) Erfinder: Lihl, Reinhard, Dr., 1120 Wien (AT); Bock, Günther, 1230 Wien (AT); Lamswood, Ian, 1140 Wien (AT); Zimmermann, Michael, 2333 Leopoldsdorf (AT)
(74) Vertreter: Reichert, Werner F., Dr.

(57) **Zusammenfassung**

Eine Vorrichtung (1) zur Gewebepräparation für die Gewebeeinbettung ist offenbart. Die Vorrichtung (1) besitzt eine Aussparung (13) zur Aufnahme eines Transportellers (15). Die Vorrichtung (1) ist von einem Gehäuse (5) umgeben, das eine Oberseite (8) definiert und eine Heiz- und Kühleinrichtung (3) ist auf der Oberseite (8) des Gehäuses (5) vorgesehen, wobei die Heiz- und Kühleinrichtung (3) mindestens eine Kammer (32) für die Aufnahme von Behandlungsbehälten ausgeformt hat. Der Tranportteller ist um eine Achse (18) drehbar und in axialer Richtung heb- und senkbar.

## Beschreibung

Die Erfindung betrifft eine Vorrichtung zur Gewebepräparation für die Gewebeeinbettung. Im besonderen betrifft die Erfindung eine Vorrichtung zur Gewebepräparation für die Gewebeeinbettung, mit einem Transportteller, der von einem Gehäuse umgeben ist, das eine innere Oberseite definiert, einer Heiz- und Kühleinrichtung, die auf der inneren Oberseite des Gehäuses vorgesehen ist und einem Mechanikmodul zum Drehen des Transporttellers und zum Anheben und Absenken des Transporttellers.

In dem US Patent 4,688,517 ist eine Vorrichtung zum Behandeln von Gewebeproben offenbart. Auf einem drehbaren Tisch ist eine Vielzahl von Behandlungsbehältern für die Probenvorbereitung vorgesehen. Der Tisch ist drehbar, so daß die Behandlungsbehälter zu einer Behandlungsstation verbracht werden können, an der die Gewebeproben nacheinander in verschieden Behandlungsflüssigkeiten eingetaucht werden. Zur geeigneten Temperierung der jeweils verwendeten Behandlungsflüssigkeiten ist eine Heiz- und Kuhleinrichtung vorgesehen, die fest mit dem Gehäuse der Vorrichtung verbunden ist. Der Tisch ist nicht nur drehbar, sondern auch in Richtung der Achse anhebbar und absenkbar. Das Drehen, das Anheben und das Absenken werden mit einem einzigen Motor durchgeführt, dazu ist ein kompliziertes Getriebe erforderlich.

Eine weitere Vorrichtung zur Gewebepräparation für die Gewebeeinbettung ist bei dem LEICA TP 1020™ offenbart. Die Behandlungsflüssigkeiten sind in Behandlungsbehältern vorgesehen, die auf einem Kreis angeordnet sind. Die zu behandelnden Proben sind in geeigneten Probenbehältern Deckel der Vorrichtung gehaltert. Durch Anheben und Drehen des Deckels werden die Proben von einem Behandlungsbad in das nächste überführt. Die Vorrichtung kann keine zwei Behandlungsbehälter unterschiedlicher Größe verarbeiten.

Eine Aufgabe der Erfindung ist es, eine Vorrichtung zur Gewebepräparation für die Gewebeeinbettung anzugeben, bei der die Handhabung einfach und die Transportvorgänge möglichst einfach steuerbar sind.

Die objektive Aufgabe wird durch eine Vorrichtung gelöst, die dadurch gekennzeichnet, dass dem Mechanikmodul ein erster Motor ausschließlich für das Drehen des Transporttellers um eine Achse und ein zweiter Motor ausschließlich zum Anheben und Absenken des Transporttellers 15 in Richtung der Achse zugeordnet ist.

Ein Vorteil der Erfindung ist es, dass durch die Verwendung von einem ersten Motor zur Drehung des Transporttellers um die Achse und einem zweiten Motor zum Anheben und Absenken des Transporttellers man sich ein aufwendiges Getriebe erspart. Hinzu kommt, dass durch die Zuordnung eines Bewegungsvorgangs zu jeweils einem Motor eine genauere und variablere Steuerung möglich ist. Die Drehbewegung des ersten Motors wird mittel eines Transmissionsmittels auf die Achse zu deren Drehung übertragen. Ebenso wird die Drehbewegung des zweiten Motors mittels eines Transmissionsmittels in ein Anheben und ein Absenken des Transporttellers umgesetzt. Das Transmissionsmittel umfasst jeweils mindestens einen Zahnriemen. Die verwendbaren Zahnriemen sind derart ausgestaltet, dass eine hochgenaue und schlupffreie Übertragung der Drehbewegung des Motors ermöglichen.

Die erfindungsgemäße Vorrichtung zur Gewebepräparation für die Gewebeeinbettung besitzt neben dem Transportteller, der von einem Gehäuse umgeben ist, eine auf der inneren Oberseite angebrachte Heiz- und Kühleinrichtung. Ein Mechanikmodul zum Drehen des Transporttellers und zum Anheben und Absenken des Transporttellers umfasst alle dafür notwendigen mechanischen Mittel. Ferner ist im Gehäuse eine Aussparung ausgeformt ist, in der der Transportteller um die Achse drehbar angeordnet ist. Der Transportteller ist aus einer Kuppel und einem Randelement aufgebaut, wobei das Randelement eine Vielzahl von Aussparungen für Aufnahme einer Vielzahl von Behandlungsbehältern ausgeformt hat. Die Vorrichtung erlaubt es ebenfalls, dass Behandlungsbehälter mit unterschiedlichen Volumen und Durchmesser auf den Transportteller gesetzt werden können.

Eine Heiz- und Kühleinrichtung ist vorgesehen, die leicht auswechselbar ist, so dass für den Benutzer auf einfache Weise zwischen Benhandlungsbehältern unterschiedlicher Größe gewechselt werden kann. Dies ist dann von Vorteil, wenn große Gewebestücke für die Gewebeeinbettung präpariert werden müssen. Hinzu kommt, dass die ebenso ausgebildete Schwenkbarkeit der Heiz und Kühleinrichtung das Auswechseln des Transporttellers erheblich erleichtert. Die Heiz- und Kühleinrichtung wird somit gerade aus der Aussparung im Gehäuse gehoben werden. Es ist nicht erforderlich, dass einzelne Behandlungsbehälter vom Transportteller abgenommen werden müssen, um das Auswechseln zu ermöglichen. Das Auswechseln der Heiz- und Kühleinrichtung kann besonders einfach durchgeführt werden. Hierzu sind die Stifte aus den Scharnieren zu entfernen und anschließend kann die gesamte Heiz- und Kühleinrichtung abgenommen werden. Eine Kodierung wird an die Steuer- und Regeleinehit im Gehäuse übermittelt, die dann entsprechend die Dreh- und Hubbewegungen des Transporttellers steuert. Bei den unterschiedlichen Heiz- und Kühleinrichtungen sind die Aufnahmen für die Behandlungsbehälter unterschiedlich groß ausgestaltet und jeweils fest mit einer Stromversorgung für die Heiz- und Kühleinrichtung verbunden. In einer Ausführungsform ist die Aufnahme für die Behandlungsbehälter derart ausgestaltet, dass eine erste und einer zweite Kammer für Behandlungsbehälter vorgesehen sind, wobei die zweite Kammer mit einer Abdeckung versehen ist. Die erste Kammer dient zum temperieren der Behandlungsflüssigkeit im Behandlungsbehälter und zum Eintauchen der Gewebeprobe in den Behandlungsbehälter. Die zweite Kammer kann zum Vorheizen der Behandlungsflüssigkeit im Behandlungsbehälter verwendet werden. Die Abdeckung verhindert ein unnötiges Verdampfen der Behandlungsflüssigkeit.

In der Zeichnung ist der Erfindungsgegenstand schematisch dargestellt und wird anhand der Figuren nachfolgend beschrieben. Dabei zeigen:
Fig. 1 eine perspektivische Ansicht der Vorrichtung zur Gewebepräparation für die Gewebeeinbettung;
Fig. 2 eine perspektivische Ansicht der Vorrichtung zur Gewebepräparation für die Gewebeeinbettung ohne den Schutzdeckel;
Fig. 3 eine Draufsicht einer zweiten Ausführungsform der Vorrichtung zur Gewebepräparation für die Gewebeeinbettung;
Fig. 4 eine Ansicht der Vorrichtung entlang der Schnittlinie A-A aus Fig. 3, wobei die Einrichtung zum Bewegung des Karousels ebenfalls dargestellt ist; und
Fig. 5 eine Ansicht der Vorrichtung entlang der Schnittlinie B-B aus Fig. 3 wobei die Einrichtung zum Bewegung des Karousels auch in dieser Ansicht zu erkennen ist.

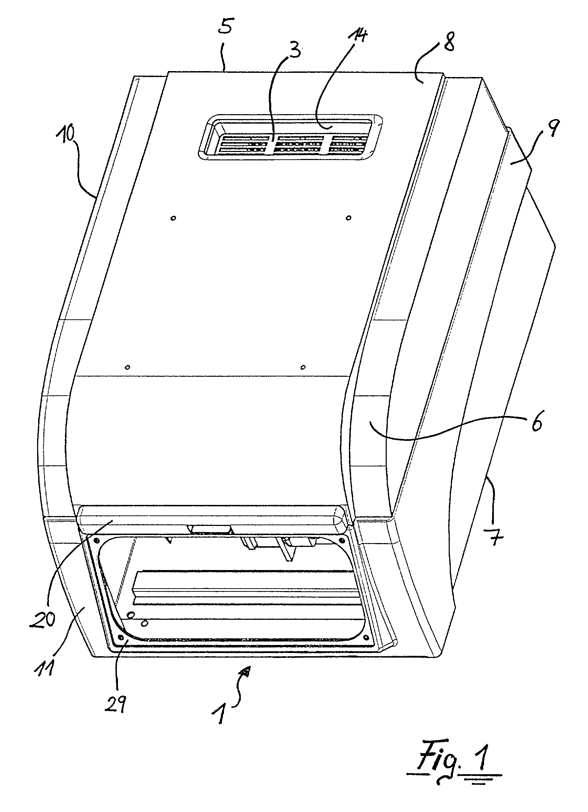

Die Vorrichtung 1 zur Gewebepräparation für die Gewebeeinbettung ist in Fig. 1 perspektivisch dargestellt. Die Vorrichtung 1 zur Gewebepräparation für die Gewebeeinbettung besteht aus einem Gehäuse 5, das im wesentlichen die mechanischen und elektronischen Teile (nicht dargestellt in Fig. 1) der Vorrichtung umschließt. Das Gehäuse 5 besteht aus einer Unterseite 7, einer Oberseite 8, aus einer rechten und einer linken Seitenwand 9 und 10 und einer Vorder- und Rückseite 11 und 12. Die Oberseite 7 des Gehäuses 5 ist in einem Deckel 6 ausgebildet. Der Deckel 6 ist zur Vorderseite 11 hin abgerundet. Der Deckel 6 kann z.B. aus einem transparenten Kunststoffteil gefertigt sein. Im Deckel 6 ist eine Freisparung 14 ausgebildet, die die Luftzufuhr der Umgebungsluft zu einer ansonsten im Gehäuse 5 befindlichen Heiz- und Kühleinrichtung 3 ermöglicht. Die Verbindung der Heiz- und Kühleinrichtung 3 zur Umgebungsluft ist erforderlich, um eine Kühlung zu erzielen und eine ungewünschte Erwärmung im Innern des Gehäuses 5 zu vermeiden. An der Vorderseite 11 des Gehäuses 5 ist eine in etwa rechtwinklige Freisparung 29 ausgebildet, in die ein Bedienelement (nicht dargestellt) für den Benutzer einsetzbar ist. Hierüber können dann vom Benutzer verschiedene Behandlungsprogramme abgerufen bzw. erstellt werden. Am Deckel 6 ist ein Griffelement ausgeformt, das das Öffnen und Schließen des Deckels 6 erleichtert.

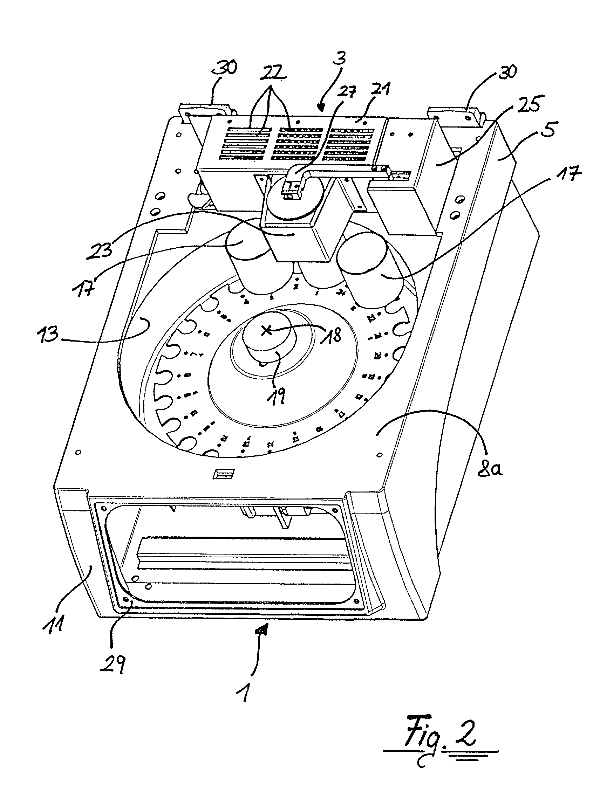

Fig. 2 zeigt eine perspektivische Ansicht der Vorrichtung 1 zur Gewebepräparation für die Gewebeeinbettung ohne den Deckel 6. Der Einfachheit halber werden für die Figuren für gleiche Merkmale die Bezugszeichen verwendet. Das Gehäuse 5 hat eine innere Oberseite ausgebildet, in der eine Aussparung 13 vorgesehen ist, durch die der Zugang ins Innere der Vorrichtung 1 ermöglicht ist. Durch die Aussparung 13 ist der Zugriff auf einen Transportteller 15, der im Innern des Gehäuses 5 angeordnet ist möglich. Der Transportteller 15 ist in dieser Ausführungsform rund ausgestaltet und besitzt an seinem Rand eine Vielzahl von Aussparungen 16, die zur Aufnahme von Behandlungsbehältern 17 dienen. In dieser Ausführungsform sind Behandlungsbehälter 17 mit einem großen Volumen für die Behandlungsflüssigkeit dargestellt. Der Transportteller 15 ist um eine Achse 18 frei drehbar und kann zusätzlich in axialer Richtung der Achse 18 angehoben und abgesenkt werden. Der Transportteller 15 ist mittels eines Sicherungselements 19 gesichert. Mit dem Gehäuse 5 ist eine Heiz- und Kühleinrichtung 3 verbunden. Die Heiz- und Kühleinrichtung 3 besteht aus einer Stromversorgung 21, die mit mehreren Lüftungsschlitzen 22 versehen ist, um die erzeugte Wärme abzutransportieren. Mit der Stromversorgung 21 ist eine Aufnahme 23 für die Behandlungsbehälter 17 verbunden, die derart angeordnet ist, dass sie zumindest teilweise in den Bereich der Aussparung 13 hineinragt. Wie bereits oben erwähnt kann der Transportteller 15 in Richtung der Achse 18 angehoben und abgesenkt werden. Im angehobenen Zustand befindet sich zumindest ein Behandlungsbehälter 17 in der Aufnahme 23 und kann in entsprechender Weise temperiert werden. In den Behandlungsbehältern befinden sich unterschiedliche Flüssigkeiten, die zur Präparation der Gewebeproben notwendig sind. Neben der Heiz- und Kühleinrichtung 3 ist eine Mechanik 25 vorgesehen mit der ein Arm 27 verbunden ist. An dem Arm 27 ist eine Gewebeprobe (nicht dargestellt) angebracht, die einem entsprechenden Präparationsprogramm unterzogen wird. Der Arm 27 kann sich auf und ab bewegen, wodurch die Gewebeprobe in die Flüssigkeit getaucht wird, die sich im dem Behandlungsbehälter 17 befindet, der sich gerade in der Aufnahme 23 befindet. Mit dem Gehäuse 5 sind ebenfalls Scharnierelemente 30, mit denen der Deckel 6 verbunden ist.

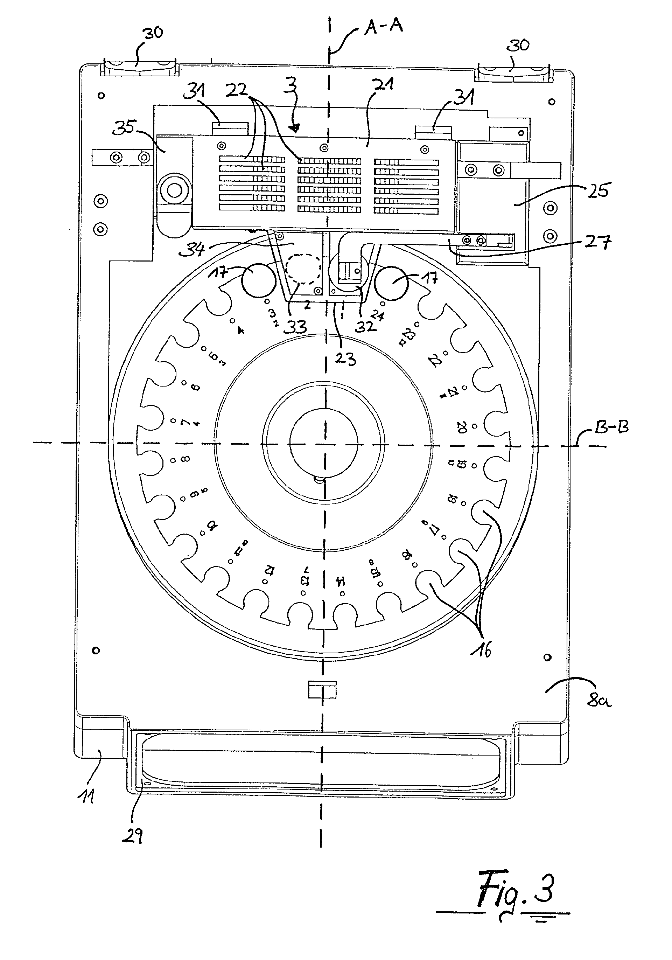

Fig. 3 zeigt eine Draufsicht auf die Vorrichtung 1 zur Gewebepräparation für die Gewebeeinbettung. Die weitere Ausführungsform umfasst eine Aufnahme 23, in die gleichzeitig mindestens zwei Behandlungsbehälter 17 eingebracht werden können. Die Heiz- und Kühleinrichtung 3 besteht aus der Stromversorgung 21 und der Aufnahme 23 für die Behandlungsbehälter 17. An der Aufnahme 23 für die Behandlungsbehälter 17 gegenüberliegenden Seite der Stromversorgung 21, ist mindesten ein Scharnier 31 vorgesehen. In dem hier dargestellten Ausführungsbeispiel sind zwei Scharniere 31 gezeigt. Mittels der Scharniere 31 kann die gesamte Heiz- und Kühleinrichtung 3 von der Oberseite 8 des Gehäuses 5 weggeschwenkt werden. Somit wird der Raum über der Aussparung 13 frei und der Transportteller 15 kann auf einfache Weise aus dem Gehäuse 5 entnommen werden. Hinzu kommt, dass die Scharniere 31 auf einfache Weise gelöst werden können, um somit die Heiz- und Kühleinrichtung 3 gegen eine andere Ausführungsform der Heizund Kühleinrichtung 3 (siehe Fig. 3) schnell auszutauschen. Die Aufnahme 23 für die Behandlungsbehälter ist an der den Scharnieren 31 gegenüberliegenden Seite der Stromversorgung 21 angebracht. In dem in Fig. 3 dargestellten Ausführungsbeispiel ist die Aufnahme 23 in eine erste und eine zweite Kammer 32 und 33 unterteilt. Die erste Kammer 32 ist zylinderförmig und sowohl oben als auch unten offen ausgestaltet. Von unten kann der Behandlungsbehälter 17 eingeführt werden und von oben kann der Arm 27 mit der Gewebeprobe in die Behandlungsflüssigkeit eintauchen. Die zweite Kammer 33 (gestrichelt dargestellt, da nicht zu sehen) ist ebenfalls zylinderförmig und oben mit einer Platte 34 verschlossen. Die zweite Kammer 33 (gestrichelt dargestellt) dient zum Vorheizen bzw. Vorkühlen der Behandlungsflüssigkeiten in jeweils einem Behandlungsbehälter 17. Die Platte 34 verhindert somit ein Verdampfen der Behandlungsflüssigkeiten. Auf dem Transportteller 15 sind gegenüber den Aussparungen 16 jeweils Nummern vorgesehen. Dabei gelten diejenigen Nummern, die unmittelbar der Aussparung 16 gegenüberliegen für die Größe der Behandlungsbehälter 17 wie sie in Fig. 3 dargestellt sind. Werden die größeren Behandlungsbehälter 17, die in etwa ein fünfmal so großes Volumen besitzen, verwendet so sind für deren Nummerierung diejenigen Nummern auf dem Transportteller 15 heranzuziehen, die von der Aussparung 16 aus weiter entfernt sind. Wie bereits aus Fig. 2 zu erkennen ist, ist bei der Verwendung der großen Behandlungsbehälter 17 diejenigen Nummerierung verdeckt, die der Aussparung 16 am nächsten ist.

Ebenso ist an der Stromversorgung 21 eine Lasche 35 befestigt, die in der Arbeitsposition die Heiz- und Kühleinrichtung 3 mit dem Gehäuse 5 verbindet. Dazu ist am Gehäuse eine Verriegelung (nicht dargestellt) vorgesehen, die somit die sichere Positionierung der Heiz- und Kühleinrichtung 3 zum Gehäuse 5 herstellt. Diese einfach herzustellende Verbindung ist zum einen wichtig, um die Heiz- und Kühleinrichtung 3 schnell auswechseln zu können und zum anderen eine feste und unveränderbare Stellung der Heiz- und Kühleinrichtung 3 zum Gehäuse 5 zu erreichen. Die unveränderbare und feste Stellung ist erforderlich, um sicher zu stellen, dass die Behandlungsbehälter 17 ohne zu Verkannten in die erste und zweite Kammer 32 und 33 eingeführt werden können.

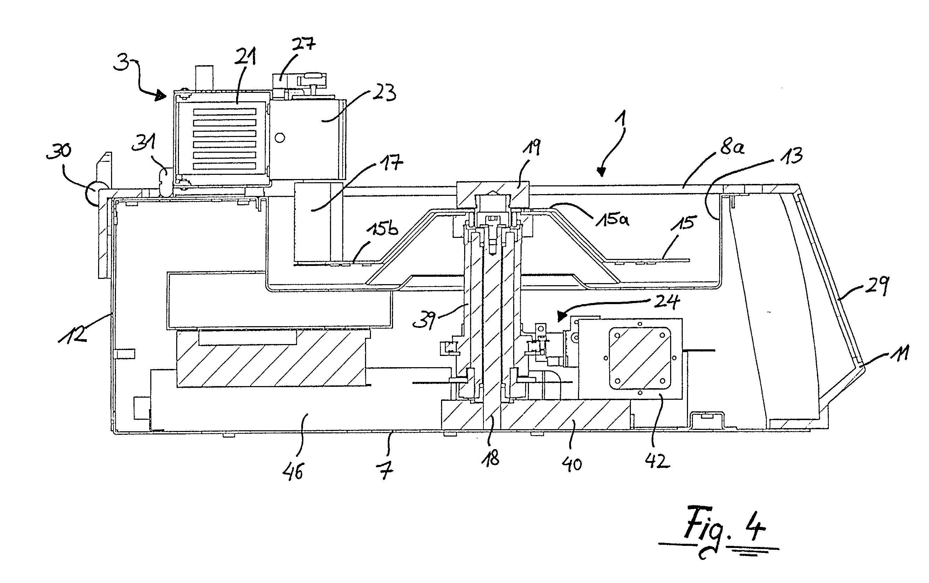

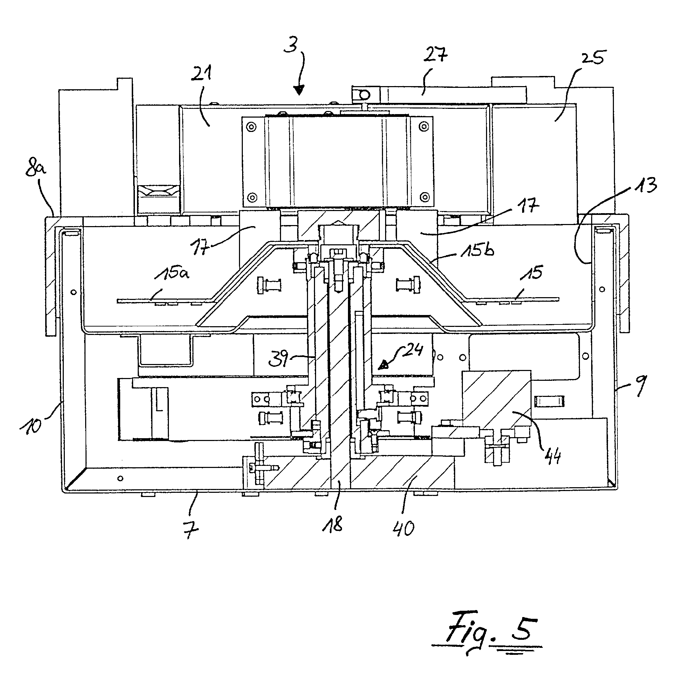

In Fig. 4 ist die Vorrichtung 1 Gewebepräparation für die Gewebeeinbettung im Schnitt entlang der Linie A-A aus Fig. 3 dargestellt. Der Transportteller 15 ist in der Aussparung 13 vorgesehen. Der Transportteller 15 besteht aus einer erhöhten zentralen Kuppel 15a, an die sich ein umlaufendes, flaches Randelement 15b anschließt. Das Randelement 15b trägt die Behandlungsbehälter 17. Zentral durch die Kuppel verläuft die Achse 18, die von einer axial beweglichen Hülse 39 umgeben ist. Der Transportteller 15 ist mit dem Sicherungselement 19 mit der Achse 18 verbunden. Bevor der Transportteller 15 ausgewechselt wird, muss das Sicherungselement 19 gelöst werden. Im Inneren des Gehäuses 5 ist ein Mechanikmodul 24 vorgesehen, das zur Durchführung der unterschiedlichen Bewegungsmuster des Transporttellers 15 dient. Das Mechanikmodul 24 ist auf der Unterseite 7 des Gehäuses 5 vorgesehen und besteht aus einer Basisplatte 40, auf der die Achse 18 montiert ist. Ferner ist auf der Basisplatte 40 ein erster Motor 42 und ein zweiter Motor 44 (siehe hierzu Fig. 5) angebracht. Der erste Motor 42 dient dazu den Transportteller 15 um die Achse 18 zu drehen. Die Drehbewegung des ersten Motors 42 kann z.B. mittels eines Zahnriemens (nicht dargestellt) auf die Achse 18 übertragen werden. Ebenso ist an der Unterseite 7 des Gehäuses 5 eine Steuer- und Regelelektronik 46 vorgesehen, die die Arbeitsweise der Vorrichtung 1 steuert und regelt. Auf der inneren Oberseite 8a des Gehäuses 5 ist die Heiz- und Kühleinrichtung 3 derart angebracht, dass die Aufnahme 23 für die Behandlungsbehälter 17 in den Bereich der Aussparung 13 hineinragen. Dabei ist es wichtig, dass der Behandlungsbehälter 17 derart unter der Aufnahme 23 positioniert ist, dass er durch Anheben des Transporttellers 15 in die Aufnahme 23 eingeführt wird. Ist der Transportteller 15 angehoben, so wird die Probe über den der Heiz- und Kühleinrichtung 3 zugeordneten Arm 27 in dem Behandlungsbehälter 17 eingetaucht. Die Heiz- und Kühleinrichtung 3 ist mit der inneren Oberseite 8a des Gehäuses 5 über mindestens ein Scharnier 31 schwenkbar mit der Vorrichtung 1 verbunden. Ebenso sind an der Rückseite 12 die Scharnierelemente 30 für das Öffnen und Schließen des Deckels 6 vorgesehen.

Eine Ansicht der Vorrichtung entlang der Schnittlinie B-B aus Fig. 3 ist in Fig. 5 dargestellt. Der zweite Motor 44 ist ebenfalls auf der Basisplatte 40 angebracht. Die Drehbewegung des zweiten Motors wird über Zahnriemen (nicht dargestellt) auf die bewegliche Hülse 39 übertragen. In Abhängigkeit von der Drehrichtung des zweiten Motors 44 wird der Transportteller 15 in Richtung der Achse 18 angehoben oder abgesenkt. Die Aussparung 13, in der der Transportteller 15 vorgesehen ist, erstreckt sich im wesentlichen von der linken Seitenwand 10 zur rechten Seitenwand 9. Die Stromversorgung 21 und die Aufnahme 23 der Heiz- und Kühleinrichtung 3 sind derart auf der inneren Oberseite 8a angeordnet, dass bei abgesenktem Transportteller 15 die auf dem Transportteller 15 eingesetzten Behandlungsbehälter 17 ein freies Drehen der Transporttellers unter der Aufnahme 23 hindurch erlauben. Das Drehen der Transporttellers 15 um die Achse 18 ist mit dem ersten Motor 42 nur im abgesenkten Zustand des Transporttellers 15 möglich.

Die Erfindung wurde in bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Vorrichtung
- 3: Heiz- und Kühleinrichtung
- 5: Gehäuse
- 6: Deckel
- 7: Unterseite
- 8: Oberseite
- 8a: innere Oberseite
- 9: rechte Seitenwand
- 10: linke Seitenwand
- 11: Vorderseite
- 12: Rückseite
- 13: Aussparung
- 14: Freisparung
- 15: Transportteller
- 15a: Kuppel
- 15b: Randelement
- 16: Aussparung
- 17a: kleine Behandlungsbehälter
- 17b: große Behandlungsbehälter
- 18: Achse
- 19: Sicherungselement
- 20: Griffelement
- 21: Stromversorgung
- 22: Lüftungsschlitze
- 23: Aufnahme
- 24: Mechanikmodul
- 25: Mechanik
- 27: Arm
- 29: Freisparung
- 30: Scharnierelemente
- 31: Scharnier
- 32: erste Kammer
- 33: zweite Kammer
- 34: Platte
- 35: Lasche
- 37: Schutzabdeckung
- 39: bewegliche Hülse
- 40: Basisplatte
- 42: erster Motor
- 44: zweiter Motor
- 46: Steuer- und Regelelektronik
- A-A: Schnittlinie
- B-B: Schnittlinie

## Patentansprüche

1. Vorrichtung (1) zur Gewebepräparation für die Gewebeeinbettung, mit einem Transportteller (15), der von einem Gehäuse (5) umgeben ist, das eine innere Oberseite (8a) definiert, einer Heiz- und Kühleinrichtung (3), die auf der inneren Oberseite (8a) des Gehäuses (5) vorgesehen ist und einem Mechanikmodul (24) zum Drehen des Transporttellers (15) und zum Anheben und Absenken des Transporttellers (15), **dadurch gekennzeichnet, dass** dem Mechanikmodul (24) ein erster Motor (42) ausschließlich für das Drehen des Transporttellers (15) um eine Achse (18) und ein zweiter Motor (44) ausschließlich zum Anheben und Absenken des Transporttellers (15) in Richtung der Achse (18) zugeordnet ist.

2. Vorrichtung nach Anspruch 1, **dadurch gekennzeichnet, dass** im Gehäuse (5) eine Aussparung (13) ausgeformt ist, in der der Transportteller (15) um die Achse (18) drehbar angeordnet ist, dass der Transportteller (15) aus einer Kuppel (15a) und einem Randelement (15b) aufgebaut ist und dass im Randelement (15b) eine Vielzahl von Aussparungen (16) für die Aufnahme einer Vielzahl von Behandlungsbehältern (17) ausgeformt ist.

3. Vorrichtung nach Anspruch 2, **dadurch gekennzeichnet, dass** den Aussparungen (16) zwei verschiedene Nummernsätze derart zugeordnet sind, dass der erste Nummernsatz durch den Einsatz großer Behandlungsbehälter (17b) abdeckbar ist.

4. Vorrichtung nach Anspruch 3, **dadurch gekennzeichnet, dass** bei Verwendung der großen Behandlungsbehälter (17b) im Vergleich zu den kleinen Behandlungsbehältern (17a) maximal nur die halbe Anzahl an großen Behandlungsbehältern (17b) auf den Transportteller (15) einsetzbar ist.

5. Vorrichtung nach Anspruch 1, **dadurch gekennzeichnet, dass** die Heiz- und Kühleinrichtung (3) im wesentlichen aus einer Stromversorgung (21) und einer Aufnahme (23) für die Behandlungsbehälter (17) besteht, dass Heiz- und Kühleinrichtung (3) die derart auf der inneren Oberseite (8a) des Gehäuses angeordnet ist, das die Aufnahme (23) in den Bereich der Aussparung (13) ragt, und dass mindestens ein Behandlungsbehälter (17) durch Anheben des Transporttellers (15) in die Aufnahme (23) einführbar ist.

6. Vorrichtung nach Anspruch 5, **dadurch gekennzeichnet, dass** mindestens ein Scharnier (31) an der Heiz- und Kühleinrichtung (3) an der Seite vorgesehen ist, die der Aufnahme (23) für die Behandlungsbehälter (17) abgewandt ist wodurch die Heiz- und Kühleinrichtung (3) zur Entnahme des Transporttellers (15) schwenkbar ist.

7. Vorrichtung nach Anspruch 1, **dadurch gekennzeichnet, dass** das die Drehbewegung des ersten Motors (42) mittels eines Transmissionsmittels auf die Achse (18) übertragbar ist.

8. Vorrichtung nach Anspruch 7, **dadurch gekennzeichnet, dass** das Transmissionsmittel ein Zahnriemen ist.

9. Vorrichtung nach Anspruch 1, **dadurch gekennzeichnet, dass** das die Drehbewegung des zweiten Motors (44) mittels eines Transmissionsmittels auf die bewegliche Hülse (39) zum Anheben und Absenken in Richtung der Achse (18) übertragbar ist.

10. Vorrichtung nach Anspruch 9, **dadurch gekennzeichnet, dass** das Transmissionsmittel mindestens einen Zahnriemen umfasst.

11. Vorrichtung nach Anspruch 5, **dadurch gekennzeichnet, dass** die Aufnahme (23) mit mindestens einer Kammer (32, 33) ausgestattet ist, die bei angehobenem Transportteller (15) den Behandlungsbehälter (17) umschließt.

12. Vorrichtung nach Anspruch 11, **dadurch gekennzeichnet, dass** die Aufnahme (23) für die Behandlungsbehälter (17), derart ausgestaltet ist, dass eine erste und eine zweite Kammer (32, 33) für Behandlungsbehälter (17) vorgesehen sind, wobei eine Kammer mit einer Schutzabdeckung (37) versehen ist.
